# EUROPÄISCHE PATENTSCHRIFT

(11) **EP 2 307 936 B1**
(45) Veröffentlichungstag und Bekanntmachung des Hinweises auf die Patenterteilung: **30.05.2018**
(21) Anmeldenummer: 09776861.8
(22) Anmeldetag: 27.06.2009
(51) Int. Cl.: G05B 23/02, G05B 19/042

(54) **VERFAHREN UND VORRICHTUNG ZUR FEHLERORTUNG BZW. -BEHEBUNG BEI MASCHINEN**
METHOD AND DEVICE FOR THE DETECTION OF DEFECTS OR CORRECTION OF DEFECTS IN MACHINES
PROCÉDÉ ET DISPOSITIF DE LOCALISATION ET DE SUPPRESSION DES DÉFAUTS DANS DES MACHINES

(30) Priorität: 25.07.2008 DE 102008035005
(43) Veröffentlichungstag der Anmeldung: 13.04.2011
(73) Patentinhaber: KHS GmbH, 44143 Dortmund (DE)
(72) Erfinder: BUCHKREMER, Wolfgang, 41515 Grevenbroich (DE); EHMER, Wilfried, 44227 Dortmund (DE)
(86) Internationale Anmeldenummer: PCT/EP2009/004658
(87) Internationale Veröffentlichungsnummer: WO 2010/009797

(56) Entgegenhaltungen:
- US-A1- 2005 094 136

## Beschreibung

Die Erfindung betrifft ein Verfahren und eine Vorrichtung zur Fehlerortung bzw. -behebung bei Maschinen, wonach ein Fehler an seinem Entstehungsort bzw. Behebungsort mittels zumindest einer Meldeeinrichtung optisch und/oder akustisch angezeigt wird.

Im Stand der Technik ist es beispielsweise bei Textilmaschinen durch die DE 22 15 582 oder auch die DE 42 40 628 A1 bekannt, beim Auftreten eines Fehlers dieses mit Hilfe einer Anzeigeleuchte optisch transparent zu machen. Dadurch wird dem Überwachungspersonal die Fehlerortung und gegebenenfalls dessen Behebung erleichtert.

Unabhängig davon beschreibt die DE 27 17 375 eine Schaltungsanordnung zur Ortung von Programm- oder Hardwarefehlern, welche mit einem Lampenfeld arbeitet. Das Auftreten eines Fehlers führt zu einem speziellen Anzeigeprogramm auf dem Lampenfeld.

Die bekannten Vorgehensweisen können nicht rundweg überzeugen. Denn sie sind von der Fehlerortung her starr und unflexibel. Das liegt im Kern daran, dass die Anzeigeleuchten nur bestimmte Fehleranzeigen wiedergeben bzw. am Entstehungsort des Fehlers vorhanden sein müssen. Auch die in der Praxis bisher eingesetzten Vorgehensweisen sind hinsichtlich ihres Komforts verbesserungsbedürftig. Denn üblicherweise wird das Bedienpersonal auf einen Fehler nur dergestalt hingewiesen, dass eine Fehlermeldung erfolgt, beispielsweise per Datenübertragung auf ein Handgerät. Dadurch wird das Bedienpersonal grundsätzlich über den Fehler informiert, nicht aber über den Entstehungsort des Fehlers oder seine mögliche Behebung.

Das ist besonders bei ausladenden Maschinen oder Fertigungsstrecken nachteilig, bei denen im Prinzip autark arbeitende Vorrichtungen nur temporär bedient oder gewartet werden müssen, also nicht permanent Personal im Nahbereich ist oder ein Bediener mehrer Ort gleichzeitig überwachen muss. Dies ist zum Beispiel in der Getränkeindustrie der Fall. Denn hier lässt sich ein Fehler oder allgemein ein Problem nur an einer bestimmten Stelle beheben. Mit der bisherigen Informationsübermittlung stellt sich die Fehlerortung und auch Fehlerbehebung jedoch äußerst zeitaufwendig dar. Große Probleme entstehen, wenn schlecht qualifiziertes Personal die Bedienung vornehmen muss. Hier will die Erfindung insgesamt Abhilfe schaffen. US2005094136 beschreibt ein System zur Markierung von Defekten.

Der Erfindung liegt das technische Problem zugrunde, ein Verfahren und eine Vorrichtung zur Fehlerortung bzw. -behebung bei Maschinen anzugeben, mit dessen bzw. deren Hilfe in kurzer Zeit und besonders effektiv die Fehlerbeseitigung gelingt.

Zur Lösung dieser technischen Problemstellung ist ein gattungsgemäßes Verfahren zur Fehlerortung bzw. -behebung dadurch gekennzeichnet, dass die Meldeeinrichtung unabhängig vom Ort (Entstehungsort und/oder Behebungsort) sowie vorzugsweise zentral angeordnet ist und den Entstehungsort und/oder den Behebungsort aus der Ferne optisch und/oder akustisch markiert.

Im Gegensatz zum gattungsbildenden Stand der Technik arbeitet die Erfindung also üblicherweise mit einer im Vergleich zu der zu überwachenden Maschine zentral angeordneten Meldeeinrichtung, also einer solchen, die unabhängig vom Entstehungsort (und/oder Behebungsort) des Fehlers angeordnet wird und im Vergleich zu dem Entstehungsort (Behebungsort) über einen mehr oder minder großen Abstand verfügt. Aus diesem Grund wird der Entstehungsort des Fehlers aus der Ferne optisch und/oder akustisch markiert. Vergleichbar mag mit dem Behebungsort vorgegangen werden.

Dabei kennzeichnet der Entstehungsort den Ort, an welchem der Fehler oder die mehreren Fehler auftreten. Bei dem Behebungsort handelt es sich demgegenüber um den Ort, an welchem der betreffende Fehler behoben wird oder behoben werden muss. Selbstverständlich sind auch mehrere Behebungsorte für ein und denselben Fehler denkbar und werden von der Erfindung umfasst.

Üblicherweise fallen der Entstehungsort und der Behebungsort zusammen, was allerdings nicht zwingend der Fall ist oder sein muss. In jedem Fall gelingt es mit Hilfe der Erfindung und der Meldeeinrichtung alternativ, den Entstehungsort, den Behebungsort oder beide aus der Ferne optisch zu markieren. Auch eine akustische Markierung ist denkbar. Genauso gut werden eine optische und akustische Markierung von der Erfindung umfasst.

Die optische Markierung findet in der Regel so statt, dass die Meldeeinrichtung mit wenigstens einer Lichtquelle ausgerüstet wird oder mit einer solchen zusammenfällt und die Lichtquelle den Entstehungsort und/oder den Behebungsort optisch gegenüber den übrigen Bestandteilen der Maschine hervorhebt. Das kann dadurch geschehen, dass der jeweilige Ort einfach angestrahlt wird. Genauso gut ist es möglich, dass die Lichtquelle in ein am zu markierenden Ort vorhandenes transparentes Maschinenteil oder Umbauungsteil eingekoppelt wird und dieses beispielsweise zum Leuchten bringt. Jedenfalls sorgt die optisch arbeitende Meldeeinrichtung dafür, dass sich der Entstehungsort respektive Behebungsort von den übrigen Bestandteilen der Maschine optisch abhebt.

Im Falle einer akustischen Markierung des betreffenden Ortes wird so vorgegangen, dass der Ort beispielsweise zum Vibrieren gebracht wird. Zu diesem Zweck mag die Meldeeinrichtung mit einem Richtlautsprecher oder dergleichen Akustikquelle ausgerüstet werden. Auch andere akustische Sendeeinrichtungen sind denkbar, solange gewährleistet ist, dass die Maschine am Entstehungsort respektive Behebungsort des ermittelten Fehlers über eine akustische Anomalie im Vergleich zu den übrigen Maschinenbestandteilen verfügt. Hierbei kann es sich generell um eine Vibration des zugehörigen Maschinenbestandteils handeln oder dieses wird für Schall-Reflektionen genutzt.

In jedem Fall muss sichergestellt werden, dass ein Bediener die akustische und/oder optische Markierung des Entstehungsortes respektive des Behebungsortes des jeweiligen Fehlers zweifelsfrei erkennt. Dazu wird bei einer optisch arbeitenden Meldeeinrichtung regelmäßig im sichtbaren Spektralbereich gearbeitet, in welchem die Lichtquelle emittiert. Genauso muss die akustische Meldeeinrichtung so ausgelegt werden, dass das zu markierende Maschinenelement im von einem Mensch hörbaren Bereich vibriert oder Schall reflektiert. Um die Ortung an dieser Stelle noch zu vereinfachen, arbeitet die Meldeeinrichtung bevorzugt mit einer Modulation bei ihrer optischen und/oder akustischen Markierung. Diese Modulation kann dazu genutzt werden, die optische und/oder akustische Markierung gegenüber Umgebungslicht oder auch Umgebungslautstärke für einen Bediener besser herausfiltbar zu gestalten.

Darüber hinaus lässt sich die optische und/oder akustische Modulation bei der Markierung des Entstehungsortes respektive Behebungsortes nutzen, um beispielsweise unterschiedliche Fehlerarten, verschiedene Fehlerstärken etc. neben einer einwandfreien Ortserkennung zu übermitteln. Das heißt, der Bediener erhält über die Modulation der Meldeeinrichtung nicht nur eine Information dergestalt, dass und wo ein Fehler auftritt (Entstehungsort des Fehlers) und wo dieser gegebenenfalls behoben werden kann (Behebungsort des Fehlers). Sondern es lassen sich zusätzlich noch Informationen dergestalt verarbeiten, dass die Modulation der Meldeeinrichtung Auskunft über den auftreteden Fehler gibt.

Bei den unterschiedlichen Fehlerarten kann es sich beispielsweise um Fehler handeln, die aufgrund eines elektrischen oder hydraulischen Problems oder schlicht und ergreifend durch das Fehlen von Verbrauchsmaterial hervorgerufen werden. Die verschiedenen Fehlerstärken drücken aus, ob die Maschine beispielsweise nach Auffüllen von Verbrauchsmaterial weiterlaufen kann bis hin zu einem ernsthaften Problem, das eine sofortige Abschaltung erfordert. Jedenfalls gelingt mit Hilfe der Modulation der Meldeeinrichtung nicht nur eine einwandfreie Ortserkennung gegenüber Umgebungslicht bzw. Umgebungslautstärke, sondern wird der Bediener zusätzlich noch über die Art und Stärke des Fehlers informiert.

Zu diesem Zweck kann im Detail der am Entstehungsort auftretende Fehler zunächst von einer Steuereinheit erfasst und ausgewertet werden. Außerdem ist es denkbar, dass die Steuereinheit den auftretenden Fehler hinsichtlich seiner Relevanz bewertet. In Abhängigkeit von diesen erfassten Daten wird dann die Meldeeinrichtung angesteuert sowie unter Umständen moduliert. Je nach dem auftretenden und identifizierten Fehler wird dann die Meldeeinrichtung von der Steuereinheit so beaufschlagt, dass der Entstehungsort und gegebenenfalls der Behebungsort eine Markierung erfahren. Diese Markierung kann dann noch mit einer Modulation - wie beschrieben - flankiert werden, um nähere Auskunft über Art und Stärke des Fehlers einem Bediener zu liefern.

Im Detail lässt sich die optische Modulation der Meldeeinrichtung so bewerkstelligen, dass die Farbe und/oder das Abbild und/oder die Strahlrichtung und/oder das Leuchtmuster der betreffenden Lichtquelle moduliert werden. Eine Farbmodulation kann im einfachsten Fall so durchgeführt werden, dass eine Weißlichtquelle mit verschiedenen Filtern flankiert wird. Alternativ hierzu kann aber auch schon von vornherein mit verschiedenfarbigen Lichtquellen gearbeitet werden, beispielsweise mit Leuchtdioden oder Farblasern.

Sofern das Abbild der Lichtquelle eine Modulation erfährt, meint dies, dass die die Lichtquelle auf den Ort (Entstehungsort und/oder Behebungsort) abbildende Optik mit beispielsweise unterschiedlichen Vergrößerungen je nach Modulation arbeitet. Im einfachsten Fall kann die Größe eines Lichtpunktes variiert werden. Darüber hinaus lässt sich auch das Leuchtmuster modulieren. Das kann im einfachsten Fall dergestalt geschehen, dass die Lichtquelle hinsichtlich ihrer Lichtstärke verändert wird. Darüber hinaus ist es aber auch denkbar, dass unterschiedliche Lichtmuster oder Leuchtmuster durch beispielsweise vorgesetzte Streufilter oder dergleichen erzeugt werden. Ferner kann die Strahlrichtung der Lichtquelle eine Änderung erfahren, indem das von der Lichtquelle ausgesandte Licht beispielsweise durch einen bewegbaren Spiegel abgelenkt wird und/oder ein bestimmtes Muster am gewünschten Ort beschreibt. Diese sämtlichen Modulationsarten lassen sich sowohl zeitlich als auch räumlich alternativ oder gemeinsam realisieren.

Das gelingt besonders einfach für den Fall, dass die Lichtquelle als beispielsweise Leuchtdiodenmatrix ausgestaltet ist, die mit verschieden farbigen Leuchtdioden ausgerüstet ist und mit deren Hilfe sich unschwer Variationen des Leuchtmusters, der Farbe, des Abbildes und auch der Strahlrichtung realisieren lassen, und zwar sowohl im Sinne einer zeitlichen als auch räumlichen Modulation.

Sofern die Meldeeinrichtung mit einer akustischen Modulation arbeitet, schlägt die Erfindung vor, dass insofern eine Veränderung der Strahlrichtung und/oder des Frequenzspektrums einer Akustikquelle bzw. des Richtlautsprechers erfolgt. Die Änderung der Strahlrichtung meint dabei konkret, dass beispielsweise der an dieser Stelle eingesetzte Richtlautsprecher die in den Raum ausgesandten Schallwellen örtlich verändert. Eine Modulation des Frequenzspektrums ist einfach dadurch denkbar, dass die von dem besagten Lautsprecher ausgesandten Schallwellen hinsichtlich ihrer Frequenz eine Änderung erfahren. Das kann insgesamt wiederum unter Berücksichtigung einer zeitlichen und/oder räumlichen Modulation geschehen.

insgesamt lässt sich die akustische und/oder optische Modulation der Meldeeinrichtung ergänzend dazu nutzen, dass aus der Modulation nicht nur Rückschlüsse auf die Fehlerart, Fehlerstärke etc. seitens des Bedieners gezogen werden können. Sondern es ist zusätzlich auch möglich, dass über die Modulation Hinweise an den Bediener übermittelt werden, wie die jeweilige Fehlerbehebung vonstatten gehen muss. Dabei ist es denkbar, dass die Modulation nach einem bestimmten Codierungsschema abläuft und das Codierungsschema zu einem bestimmten Informationsgehalt korrespondiert. Selbstverständlich kann auch ganz simpel ein Fehlercode oder ein Hinweis auf den Entstehungsort des Fehlers respektive dessen Behebungsort projiziert werden.

Gegenstand der Erfindung ist auch eine Vorrichtung, die sich zur Fehlerortung bzw. -behebung bei Maschinen besonders eignet. Diese Vorrichtung ist besonders zur Durchführung des beschriebenen Verfahrens geeignet und wird in Anspruch 8 in Bezug genommen. Bevorzugte Ausführungsformen dieser Vorrichtung sind Gegenstand der Ansprüche 9 ff..

Im Ergebnis werden ein Verfahren und eine Vorrichtung zur Verfügung gestellt, mit deren Hilfe eine Bedienperson unschwer und zuverlässig über den Entstehungsort eines Fehlers und zugleich dessen Behebungsort informiert wird. Darüber hinaus werden Informationen zur Fehlerbehebung sowie Art und Stärke des Fehlers übermittelt. Das alles geschieht in der Regel von einer an exponierter Stelle angeordneten Meldeeinrichtung aus, die meistens oberhalb der zu überwachenden Maschine angeordnet ist. Bei dieser Meldeeinrichtung handelt es sich im Allgemeinen um eine zentrale Lichtquelle.

Auf diese Weise gelangt das Bedienpersonal zielsicher an den Entstehungsort bzw. Behebungsort des Fehlers und kann aufgrund der zusätzlich übermittelten Informationen unmittelbar für eine Fehlerbehebung sorgen. Dadurch wird im Vergleich zum bisherigen Stand der Technik wertvolle Zeit eingespart. Hierin sind die wesentlichen Vorteile zu sehen.

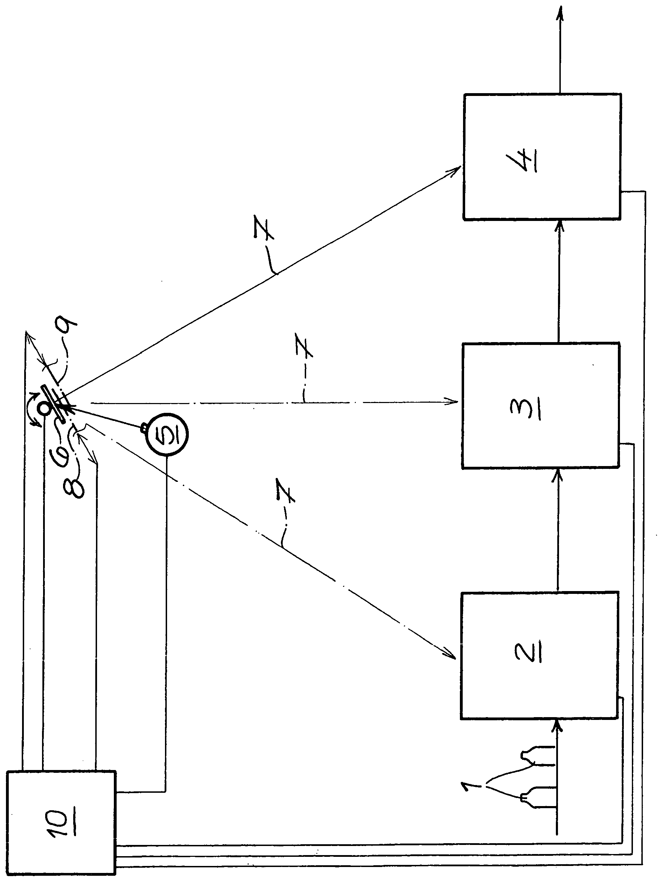

Im Folgenden wird die Erfindung anhand einer lediglich ein Ausführungsbeispiel darstellenden Zeichnung näher erläutert. Die einzige Figur zeigt eine erfindungsgemäße Vorrichtung in einer Übersicht.

Dargestellt ist eine Vorrichtung zur Fehlerortung und/oder Fehlerbehebung bei Maschinen. Bei der dargestellten Maschine handelt es sich um eine Flaschenbehandlungsmaschine, also eine Anlage, mit deren Hilfe Flaschen 1 behandelt werden. Im Ausführungsbeispiel und nicht einschränkend meint die Behandlung von Flaschen 1 deren Reinigung in einer Reinigungsvorrichtung 2, das anschließende Aufbringen eines Etiketts in einer Etikettierstation 3 und schließlich das Einfüllen eines Getränks, beispielsweise Bier, in die solchermaßen vorbereiteten Flaschen 1 in einer Abfülleinheit 4. Dabei sind die zuvor genannten Maschinenbestandteile 2, 3, 4 der Flaschenbehandlungsanlage bzw. Flaschenbehandlungsmaschine lediglich schematisch dargestellt, weil es auf ihre Ausgestaltung im Detail nicht ankommt.

Von besonderer Bedeutung für die vorliegende Erfindung ist der Umstand, dass die dargestellte Maschine bzw. Flaschenbehandlungsanlage im Beispielfall mit einer Vorrichtung zur Fehlerortung ausgerüstet ist. Alternativ mag auch eine Vorrichtung zur Fehlerbehebung vorgesehen sein. In der Regel fallen die Vorrichtung zur Fehlerortung und Fehlerbehebung zusammen.

Zum grundsätzlichen Aufbau der Vorrichtung zur Fehlerortung bzw. - behebung gehört eine Meldeeinrichtung 5, mit deren Hilfe ein Fehler an seinem Entstehungsort bzw. Behebungsort optisch und/oder akustisch angezeigt wird. Im Rahmen des Ausführungsbeispiels wird lediglich eine optische Anzeige bzw. Markierung des Entstehungsortes respektive Behebungsortes des Fehlers beschrieben. Im Gegensatz zum Stand der Technik ist die besagte Meldeeinrichtung 5 unabhängig vom Entstehungsort respektive Behebungsort des Fehlers im Vergleich zu der zu überwachenden Maschine angeordnet und folglich auch räumlich von dem besagten Entstehungsort bzw. Behebungsort entfernt.

Meistens wird die Meldeeinrichtung 5 zentral im Vergleich zu der Maschine bzw. der Flaschenbehandlungsanlage im Beispielfall platziert, und zwar oberhalb der Maschine respektive Flaschenbehandlungsanlage. Dadurch gelingt eine problemlose Markierung des Entstehungsortes respektive Behebungsortes des Fehlers, und zwar aus der Ferne. Zu diesem Zweck wird der Entstehungsort bzw. Behebungsort im dargestellten Beispiel optisch markiert.

Dazu verfügt die Meldeeinrichtung 5 über eine zentrale Lichtquelle 5 bzw. mehrere zentral angeordnete Lichtquellen 5 respektive ist als solche ausgestaltet. Darüber hinaus ist die Meldeeinrichtung 5 mit einer Strahlablenkungsoptik 6 ausgerüstet, die vorliegend und nur schematisch als Umlenkspiegel 6 ausgebildet ist. Der Umlenkspiegel bzw. die Strahlablenkungsoptik 6 weist einen Stellmotor auf, der ebenso wie die einzelnen Maschinenelemente bzw. Maschinenbestandteile 2, 3, 4 an eine zentrale Steuereinheit 10 angeschlossen ist. Das Gleiche gilt für die Lichtquelle 5, bei welcher es sich um eine Strahllichtquelle handelt, also eine solche, die einen Lichtstrahl im sichtbaren Spektrum emittiert.

Um nun den Entstehungsort respektive Behebungsort des Fehlers optisch zu markieren, wird die Lichtquelle 5 bzw. ein die Lichtquelle 5 verlassender Lichtstrahl 7 beispielsweise in ein transparentes Maschinenbauteil der einzelnen Maschinenelemente 2, 3, 4 eingekoppelt. Durch diese Lichteinkopplung fängt das Maschinenbauteil an zu leuchten bzw. hebt sich von seinem Untergrund ab. Im Allgemeinen wird jedoch der jeweilige Ort schlicht und ergreifend durch den Lichtstrahl 7 beleuchtet.

In einer nicht dargestellten Variante sind am Rand von transparenten Maschinenbauteilen, z.B. Schutzscheiben, Lichtleiter angeordnet, die von einer Steuereinheit 10 angesteuert werden und von einer zentralen oder dezentralen Lichtquellen 5 gespeiste werden. Die Lichtleiter selbst sind in einer Leiste oder im Rahme des transparenten Maschinenbauteils untergebracht und können.

Je nachdem, wo der zu beleuchtende Ort angesiedelt ist, sorgt die Strahlablenkungsoptik 6 bzw. allgemein die Strahlablenkung 6 dafür, dass dieser jeweilige Ort eine optische Hervorhebung gegenüber dem Umgebungslicht erfährt. Eine solche optische Hervorhebung gelingt besonders für den Fall eindrucksvoll, dass die Lichtquelle 5 als Laser-Lichtquelle 5 ausgebildet ist und einen oder mehrere Laser aufweist. Darüber hinaus ist die ortsfest oberhalb der Flaschenbehandlungsanlage angeordnete Lichtquelle 5 mit einem Filter 8 ausgerüstet, mit dessen Hilfe die Farbe der Lichtquelle geändert werden kann.

Diese Vorgehensweise empfiehlt sich besonders für den Fall, dass mit einer weißen Lichtquelle 5 gearbeitet wird. Bei dem Filter 8 mag es sich um ein Farbfilterrad handeln, welches mit verschiedenen Farbfiltern ausgerüstet ist, die je nach Bedarf vor die (weiße) Lichtquelle 5 geschwenkt werden können, so dass sich die Farbe des letztendlich mit Hilfe der Strahlablenkung 6 auf den Ort projizierten Lichtstrahles 7 in gewünschter Art und Weise ändert.

Darüber hinaus mag die Lichtquelle 5 mit einer Streuscheibe 9, einer Musterscheibe oder dergleichen flankiert werden. Dadurch erzeugt die Meldeeinrichtung bzw. Lichtquelle 5 am Ort ihrer Projektion ein Markierungsmuster. Dieses mag zugleich mit Hilfe des Filters 8 farbig gestaltet sein. - Anstelle der Lichtquelle 5 inklusive Farbfilter 8 und Streuscheibe 9 oder Markierungsmuster 9 kann selbstverständlich im Rahmen der Meldeeinrichtung 5 auch mit einer flächigen Anordnung von farbigen und Weißlicht-LED's gearbeitet werden. Mit dieser LED-Anordnung lassen sich problemlos unterschiedliche Markierungsmuster wählbarer Farbe und verschiedener Strahlrichtung realisieren.

Die Ansteuerung der Meldeeinrichtung 5 bzw. der Lichtquelle 5, des Filters 8, der Streuscheibe 9 sowie der Strahlablenkung 6 erfolgt insgesamt mit Hilfe der bereits angesprochenen Steuereinheit 10. Diese Steuereinheit 10 ist auch an die einzelnen Maschinenelemente 2, 3, 4 angeschlossen, um dort gegebenenfalls auftretende Fehler zu orten. Auf diese Weise kann die Steuereinheit 10 die Meldeeinrichtung 5 je nach Entstehungsort des Fehlers zur Markierung des Entstehungsortes ansteuern. Genauso gut ist die Steuereinheit 10 in der Lage, den Behebungsort des Fehlers mit Hilfe der Meldeeinrichtung 5 sichtbar zu machen.

Zu diesem Zweck wird der von der Meldeeinrichtung 5 letztendlich ausgehende Lichtstrahl 7 auf den jeweiligen Ort gelenkt, wie dies in der einzigen Figur durch einzelne Lichtstrahlen 7 schematisch angedeutet ist. Dabei lässt sich der jeweilige Lichtstrahl 7 hinsichtlich seiner Farbe, seines am jeweiligen Ort entstehenden Markierungsmusters, seiner Strahlrichtung und schließlich im Hinblick auf das erzeugte Leuchtmuster der Lichtquelle 5 variieren. Dazu wird im einfachsten Fall die Lichtquelle 5 hinsichtlich ihrer Leuchtstärke mit Hilfe der Steuereinheit 10 moduliert. Jedenfalls kann der Ort (Entstehungsort des Fehlers und/oder Behebungsort des Fehlers) optisch hervorgehoben werden, und zwar zugleich im Sinne einer zeitlichen und/oder räumlichen Modulation des von der Meldeeinrichtung 5 ausgehenden Lichtstrahles 7. Dadurch wird ein Bediener umfassend über den Fehler als solchen, seinen Entstehungsort, seinen etwaigen Behebungsort sowie Art und Stärke des Fehlers informiert. Zusätzlich kann der Bediener aus den übermittelten Informationen gegebenenfalls auch auf die Fehlerbehebung rückschließen, wie dies einleitend bereits beschrieben wurde.

## Patentansprüche

1. Verfahren zur Anzeige des Entstehungsortes mindestens eines Fehlers bei einer Maschine, an welchem der Fehler oder die mehreren Fehler auftreten, und/oder zur Anzeige des mindestens einen Behebungsortes bei einer Maschine, an dem der oder die Fehler behoben werden muss/müssen dadurch gekennzeichenet dass
- der mindestens eine, an seinem Entstehungsort auftretende Fehler von einer Steuereinheit (10) erfasst und ausgewertet wird und
- von der Steuereinheit (10) mindestens eine Meldeeinrichtung (5), die unabhängig vom Entstehungs- und/oder Behebungsort angeordnet ist, derart angesteuert wird, dass - die Meldeeinrichtung (5) den Entstehungs- und/oder Behebungsort aus der Ferne optisch und/oder akustisch markiert.

2. Verfahren nach Anspruch 1, **dadurch gekennzeichnet, dass** die Meldeeinrichtung (5) zentral angeordnet ist.

3. Verfahren nach Anspruch 1 oder 2, **dadurch gekennzeichnet, dass** die Meldeeinrichtung (5) den Ort mit einer Modulation optisch und/oder akustisch markiert, um unterschiedliche Fehlerarten oder verschiedene Fehlerstarken anzuzeigen und/oder eine einwandfreie Ortserkennung gegenüber Umgebungslicht bzw, Umgebungslautstärke zu gewährleisten.

4. Verfahren nach einem der Ansprüche 1 bis 3, **dadurch gekennzeichnet, dass** der am Entstehungsort auftretende Fehler von der Steuereinheit (10) hinsichtlich seiner Relevanz bewertet und in Abhängigkeit hiervon die Meldeeinrichtung (5) angesteuert sowie gegebenenfalls moduliert wird.

5. Verfahren nach einem der Ansprüche 1 bis 4, **dadurch gekennzeichnet, dass** die Meldeeinrichtung (5) optisch dergestalt moduliert wird, dass die Farbe und/oder das Abbild und/oder die Strahlrichtung und/oder das Leuchtmuster einer Lichtquelle (5) zeitlich und/oder räumlich moduliert werden,

6. Verfahren nach einem der Ansprüche 1 bis 5, **dadurch gekennzeichnet, dass** die Meldeeinrichtung (5) akustisch dergestalt moduliert wird, dass die Strahlrichtung und/oder das Frequenzspektrum einer Akustikquelle zeitlich und/oder räumlich moduliert werden.

7. Verfahren nach einem der Ansprüche 1 bis 6, **dadurch gekennzeichnet, dass** die Meldeeinrichtung (5) akustisch und/oder optisch so moduliert wird, dass aus der Modulation Rückschlüsse auf die vorzunehmende Fehlerbehebung gezogen werden können.

8. Vorrichtung zur Anzeige des Entstehungsortes mindestens eines Fehlers bei einer Maschine, an welchem der Fehler oder die mehreren Fehler auftreten, und/oder zur Anzeige des mindestens einen Behebungsortes bei einer Maschine, an dem der oder die Fehler behoben werden muss/müssen **gekennzeichnet durch**
- einer Steuereinheit (10) zur Erfassung und Auswertung des mindestens einen, an seinem Entstehungsort auftretenden Fehlers und
- mindestens einer von der Steuereinheit (10) angesteuerten Meldeeinrichtung (5), die unabhängig vom Ertstehungs- und/oder Behebungsort angeordnet ist, und
- zur optischen und/oder akustischen Markierung des Entstehungs- und/oder Behebungsortes aus der Ferne ausgebildet ist.

9. Vorrichtung nach Anspruch 8, **dadurch gekennzeichnet, dass** die Meldeelnrichtung (5) zentral angeordnet ist.

10. Vorrichtung nach Anspruch 8 oder 9, **dadurch gekennzeichnet, dass** die Meldeeinrichtung (5) als zentrale Lichtquelle (5) ausgebildet ist.

11. Vorrichtung nach Anspruch 10, **dadurch gekennzeichnet, dass** die Lichtquelle (5) am Entstehungsort und/oder Behebungsort des Fehlers In ein dortiges transparentes Maschinenbauteil eingekoppelt wird oder den jeweiligen Ort beleuchtet.

12. Vorrichtung nach einem der Ansprüche 8 bis 11 **dadurch gekennzeichnet, dass** die Meldeeinrichtung (5) ortsfest und oberhalb der Maschine angeordnet ist.

13. Vorrichtung nach einem der Anspruche 8 bis 12, **dadurch gekennzeichnet, dass** der Strahl der Lichtquelle (5) dynamisch gerichtet oder abgelenkt werden kann.

14. Vorrichtung nach einem der Ansprüche 8 bis 13, **dadurch gekennzeichnet, dass** die Lichtquelle (5) mit einer Strahlablenkung (6) ausgerüstet Ist.

15. Vorrichtung nach einem der Ansprüche 8 bis 13, **dadurch gekennzeichnet, dass** die Lichtquelle (5) motorisch angetrieben um mindestens um eine Achse schwenkbar gelagert ist, und idealerweise um eine senkrechte Hochachse und eine waagerechte Querachse schwenkbar gelagert ist.

16. Vorrichtung nach einem der Ansprüche 8 bis 15, **dadurch gekennzeichnet, dass** die Lichtquelle (5) einen geraden Lichtstrahl (7) erzeugt und hierzu beispielsweise als Laser-Lichtquelle (5) ausgebildet ist.

17. Vorrichtung nach einem der Ansprüche 8 bis 16, **dadurch gekennzeichnet, dass** der Lichtquelle (5) ein Filter (8) zur Farbänderung des ausgesandten Lichtes zugeordnet Ist.

18. Vorrichtung nach einem der Ansprüche 8 bis 17, **dadurch gekennzeichnet, dass** die Maschine und die Meldeelnrichtung (5) an eine Steuereinheit (10) angeschlossen sind, welche die Meldeeinrichtung (5) je nach Entstehungsort des Fehlers zur Markierung des Entstehungsortes und/oder des Behebungsortes ansteuert.

19. Vorrichtung nach einem der Ansprüche 8 bis 18, **dadurch gekennzeichnet, dass** die Meldeeinrichtung (5) am Entstehungsort und/oder Behebungsort des Fehlers ein zeitlich und/oder räumlich variierendes Markierungsmuster erzeugt, welches wahlweise Auskunft gibt über den Fehler als solchen, die Art des Fehlers, seine Entstehung, seine Relevanz oder seine Behebung jeweils einzeln oder in Kombination.

20. Vorrichtung nach einem der Ansprüche 8 bis 11, **dadurch gekennzeichnet, dass** die Meldeeinrichtung (5) mindestens einen Lichtleiter oder mindestens eine Leuchtdiode umfasst, die direkt an transparenten Maschinenbauteilen angrenzt oder diesen gegenüber liegt, wobei die Meldeeinrichtung von einer Steuereinheit 10 angesteuert wird.

21. Vorrichtung nach Anspruch 20, **dadurch gekennzeichnet, dass** der mindestens eine Lichtleiter oder die mindestens eine Leuchtdiode in einer Leiste oder in einem Rahmen am transparenten Maschinenbauteil direkt angrenzend angeordnet ist

## Claims

1. Method for displaying the point of origin of at least one defect in a machine, at which the defect or several defects are occurring, and/or for displaying of the at least one point of correction in a machine at which the defect or defects must be corrected, **characterised in that**
- the at least one defect, when occurring at its point of origin, is detected and evaluated by a control unit (10), and
- the control unit (10) actuates a reporting device (5), which is arranged independently of the point of origin and/or of correction, in such a way that the reporting device (5) marks the point of origin and/or point of correction remotely by optical and/or acoustic means.

2. Method according to claim 1, **characterised in that** the reporting device (5) is arranged centrally.

3. Method according to claim 1 or 2, **characterised in that** the reporting device (5) marks the location optically and/or acoustically with a modulation, in order to display different types of defects or different degrees of severity of defect and/or to ensure a perfect location identification in relation to ambient light or ambient noise.

4. Method according to any one of claims 1 to 3, **characterised in that** the defect arising at the point of origin is evaluated by the control unit (10) in respect of its relevance, and depending on this the reporting device (5) is actuated and modulated as may be applicable.

5. Method according to any one of claims 1 to 4, **characterised in that** the reporting device (5) is optically modulated in such a way that the colour and/or the image and/or the beam direction and/or the light pattern of a light source (5) are modulated in time and/or in space.

6. Method according to any one of claims 1 to 5, **characterised in that** the reporting device (5) is modulated acoustically in such a way that the beam direction and/or the frequency spectrum of an acoustic source are modulated in time and/or in space.

7. Method according to any one of claims 1 to 6, **characterised in that** the reporting device (5) is modulated acoustically and/or optically in such a way that from the modulation conclusions can be drawn with regard to the defect rectification which is to be carried out.

8. Device for displaying the point of origin of at least one defect in a machine, at which the defect or several defects are occurring, and/or for displaying the at least one point of correction in a machine at which the defect or defects must be rectified, **characterised by**
- a control unit (10) for detecting and evaluating the at least one defect occurring at its point of origin, and
- at least one reporting device (5) actuated by the control unit (10), which is arranged independently of the point of origin and/or the point of correction, and
- is configured for the optical and/or acoustic marking of the point of origin and/or place of correction remotely.

9. Device according to claim 8, **characterised in that** the reporting device (5) is arranged centrally.

10. Device according to claim 8 or 9, **characterised in that** the reporting device (5) is configured as a central light source (5).

11. Device according to claim 10, **characterised in that** the light source (5), at the point of origin and/or point of correction of the defect is coupled into a transparent machine component at that location, or illuminates the respective location.

12. Device according to any one of claims 8 to 11, **characterised in that** the reporting device (5) is arranged in a fixed position and above the machine.

13. Device according to any one of claims 8 to 12, **characterised in that** the beam of the light source (5) can be dynamically directed or deflected.

14. Device according to any one of claims 8 to 13, **characterised in that** the light source (5) is provided with a beam deflector (6).

15. Device according to any one of claims 8 to 13, **characterised in that** the light source (5) is mounted and driven by a motor such as to pivot about an axis, and ideally about a perpendicular upright axis and a horizontal transverse axis.

16. Device according to any one of claims 8 to 15, **characterised in that** the light source (5) generates a straight light beam (7) and for this purpose is configured, for example, as a laser light source (5).

17. Device according to any one of claims 8 to 16, **characterised in that** a filter (8) is assigned to the light source (5) in order to change the colour of the emitted light.

18. Device according to any one of claims 8 to 17, **characterised in that** the machine and the reporting device (5) are connected to a control unit (10), which actuates the reporting device (5), depending on the point of origin of the defect, for the marking of the point of origin and/or of the point of correction.

19. Device according to any one of claims 8 to 18, **characterised in that** the reporting device (5) produces at the point of origin and/or the point of correction a marking pattern which varies in time and/or in space, which optionally provides information about the defect as such, the nature of the defect, its cause, its relevance, or its correction, in each case individually or in combination.

20. Device according to any one of claims 8 to 11, **characterised in that** the reporting device (5) comprises a light conductor or at least one light-emitting diode, which is directly adjacent to transparent machine components or is located opposite these components, wherein the reporting device is actuated by a control unit 10.

21. Device according to claim 20, **characterised in that** the at least one light conductor or the at least one light-emitting diode is arranged in a strip or in a frame directly adjacent to the transparent machine component.

## Revendications

1. Procédé servant à indiquer un emplacement d'apparition d'au moins une erreur dans le cas d'une machine, au niveau duquel l'erreur ou les nombreuses erreurs apparaissent et/ou servant à indiquer l'au moins un emplacement de suppression dans le cas d'une machine, au niveau duquel la ou les erreurs doivent impérativement être supprimées,
**caractérisé en ce que**
- l'au moins une erreur apparaissant au niveau de son emplacement d'apparition est détectée et analysée par une unité de commande (10), et
- au moins un dispositif d'avertissement (5), qui est disposé indépendamment de l'emplacement d'apparition et/ou de suppression, est piloté par l'unité de commande (10) de telle manière que le dispositif d'avertissement (5) marque optiquement et/ou acoustiquement à distance l'emplacement d'apparition et/ou de suppression.

2. Procédé selon la revendication 1, **caractérisé en ce que** le dispositif d'avertissement (5) est disposé de manière centrale.

3. Procédé selon la revendication 1 ou 2, **caractérisé en ce que** le dispositif d'avertissement (5) marque optiquement et/ou acoustiquement l'emplacement avec une modulation afin d'indiquer différents types d'erreurs ou des importances d'erreur différentes et/ou afin de garantir une identification d'emplacement irréprochable par rapport à la lumière ambiante ou au volume sonore ambiante.

4. Procédé selon l'une quelconque des revendications 1 à 3, **caractérisé en ce que** l'erreur apparaissant au niveau de l'emplacement d'apparition est évaluée par l'unité de commande (10) concernant sa pertinence et le dispositif d'avertissement (5) est piloté voire éventuellement modulé en fonction de cette évaluation.

5. Procédé selon l'une quelconque des revendications 1 à 4, **caractérisé en ce que** le dispositif d'avertissement (5) est modulé optiquement de telle manière que la couleur et/ou l'image et/ou le sens du rayonnement et/ou le motif lumineux d'une source de lumière (5) sont modulés dans le temps et/ou dans l'espace.

6. Procédé selon l'une quelconque des revendications 1 à 5, **caractérisé en ce que** le dispositif d'avertissement (5) est modulé acoustiquement de telle manière que le sens de rayonnement et/ou le spectre de fréquence d'une source acoustique sont modulés dans le temps et/ou dans l'espace.

7. Procédé selon l'une quelconque des revendications 1 à 6, **caractérisé en ce que** le dispositif d'avertissement (5) est modulé acoustiquement et/ou optiquement de telle sorte qu'il est possible de déduire de la modulation la suppression d'erreur à effectuer.

8. Dispositif servant à indiquer l'emplacement d'apparition d'au moins une erreur dans le cas d'une machine, au niveau duquel l'erreur ou les nombreuses erreurs apparaissent et/ou servant à indiquer l'au moins un emplacement de suppression dans le cas d'une machine, au niveau duquel l'erreur ou les erreurs doivent impérativement être supprimées,
**caractérisé par**
- une unité de commande (10) servant à détecter et à analyser l'au moins une erreur apparaissant au niveau de son emplacement d'apparition, et
- au moins un dispositif d'avertissement (5) piloté par l'unité de commande (10), lequel est disposé indépendamment de l'emplacement d'apparition et/ou de suppression, et
- qui est réalisé afin de marquer à distance optiquement et/ou acoustique l'emplacement d'apparition et/ou de suppression.

9. Dispositif selon la revendication 8, **caractérisé en ce que** le dispositif d'avertissement (5) est disposé de manière centrale.

10. Dispositif selon la revendication 8 ou 9, **caractérisé en ce que** le dispositif d'avertissement (5) est réalisé sous la forme d'une source de lumière (5) centrale.

11. Dispositif selon la revendication 10, **caractérisé en ce que** la source de lumière (5) est injectée au niveau de l'emplacement d'apparition et/ou de suppression de l'erreur, dans un composant de machine transparent à cet endroit ou éclaire l'emplacement concerné.

12. Dispositif selon l'une quelconque des revendications 8 à 11, **caractérisé en ce que** le dispositif d'avertissement (5) est disposé de manière stationnaire et au-dessus de la machine.

13. Dispositif selon l'une quelconque des revendications 8 à 12, **caractérisé en ce que** le rayonnement de la source de lumière (5) peut être dirigé ou dévié de manière dynamique.

14. Dispositif selon l'une quelconque des revendications 8 à 13, **caractérisé en ce que** la source de lumière (5) est équipée d'un système de déviation de rayonnement (6).

15. Dispositif selon l'une quelconque des revendications 8 à 13, **caractérisé en ce que** la source de lumière (5) entraînée de manière motorisée est montée de manière à pouvoir pivoter autour d'au moins un axe et est montée de manière à pouvoir pivoter idéalement autour d'un axe vertical perpendiculaire et d'un axe transversal horizontal.

16. Dispositif selon l'une quelconque des revendications 8 à 15, **caractérisé en ce que** la source de lumière (5) génère un faisceau de lumière (7) rectiligne et est réalisée à cet effet par exemple sous la forme d'une source de lumière laser (5).

17. Dispositif selon l'une quelconque des revendications 8 à 16, **caractérisé en ce qu'**un filtre (8) servant à modifier la couleur de la lumière émise est associé à la source de lumière (5).

18. Dispositif selon l'une quelconque des revendications 8 à 17, caractérisé e ce que la machine et le dispositif d'avertissement (5) sont raccordés à une unité de commande (10), qui pilote le dispositif d'avertissement (5) selon l'emplacement d'apparition de l'erreur afin de marquer l'emplacement d'apparition et/ou l'emplacement de suppression.

19. Dispositif selon l'une quelconque des revendications 8 à 18, **caractérisé en ce que** le dispositif d'avertissement (5) génère, au niveau de l'emplacement d'apparition et/ou de l'emplacement de suppression de l'erreur, un modèle de marquage à variation dans le temps et/ou dans l'espace, lequel livre au choix des informations sur l'erreur en tant que telle, le type de l'erreur, son apparition, sa pertinence ou sa suppression, respectivement individuellement ou de manière combinée.

20. Dispositif selon l'une quelconque des revendications 8 à 11, **caractérisé en ce que** le dispositif d'avertissement (5) comprend au moins un guide de lumière ou au moins une diode luminescente, qui jouxte directement des composants de machine transparents et leur fait face, dans lequel le dispositif d'avertissement est piloté par l'unité de commande (10).

21. Dispositif selon la revendication 20, **caractérisé en ce que** l'au moins un guide de lumière ou l'au moins une diode luminescente sont disposés de manière à se jouxter directement au niveau du composant de machine transparent dans une baguette ou dans un châssis.
